# EUROPEAN PATENT SPECIFICATION

(11) **EP 4 799 388 B1**
(45) Date of publication and mention of the grant of the patent: **07.10.2026**
(21) Application number: 24795257.5
(22) Date of filing: 21.10.2024
(51) Int. Cl.: H04W 24/02, H04W 52/02

(54) **DETERMINATION OF A LOAD THRESHOLD FOR TRIGGERING POWER SAVING MODE OF A CELL**
BESTIMMUNG EINER LASTSCHWELLE ZUR AUSLÖSUNG EINES ENERGIESPARMODUS EINER ZELLE
DÉTERMINATION D'UN SEUIL DE CHARGE POUR DÉCLENCHER UN MODE D'ÉCONOMIE D'ÉNERGIE D'UNE CELLULE

(30) Priority: 24.10.2023 FI 20236181
(43) Date of publication of application: 02.09.2026
(73) Proprietor: Elisa Oyj, 00520 Helsinki (FI)
(72) Inventor: CHIS, Adriana, 00520 Helsinki (FI); LUNDEN, Petteri, 00520 Helsinki (FI)
(74) Representative: Papula Oy
(86) International application number: PCT/FI2024/050564
(87) International publication number: WO 2025/088248

(56) References cited:
- EP-A1- 2 787 777
- US-A1- 2018 192 366

## Description

### TECHNICAL FIELD

Various example embodiments generally relate to the field of wireless communications. Some example embodiments relate to determining a load threshold for triggering power saving mode of a cell of a cellular communication network.

### BACKGROUND

Wireless communication may be implemented with a cellular radio network comprising transmission sites that offer communication services via multiple cells corresponding to certain geographical coverage areas. A sector of a cell may be configured with multiple overlapping cells, for example to serve a variable amount of users at a particular geographical area. Document EP 2 787 777 A1 relates to resource management in heterogeneous mobile communication systems. Document US 2018/192366 A1 relates to inter-cell power coordination for energy efficient cellular network such as a method for adaptively powering down cells within a cluster.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure enable to reduce power consumption in a cellular communication network. This benefit may be achieved by the features of the independent claims. Further example embodiments are provided in the dependent claims, the description, and the drawings.

According to a first aspect, method is disclosed. The method may be computer-implemented. The method may comprise: obtaining performance data of a first cell of a cellular communication network, wherein the performance data is indicative of quality of service of the first cell at a plurality of load levels of the first cell; determining a fit curve for the quality of service of the first cell as a function of load level of the first cell; and determining, based on the fit curve, a load threshold for triggering a power saving mode of a second cell of the cellular communication network, wherein a coverage area of the second cell overlaps with a coverage area of the first cell.

According to an example embodiment of the first aspect, the method comprises: outputting an indication of the load threshold, causing the second cell to enter the power saving mode, in response to determining that a load level of the second cell decreases below the load threshold, and/or causing the second cell to enter the power saving mode, in response to determining that a sum of a load level of the first cell and the load level of the second cell is below the load threshold.

According to an example embodiment of the first aspect, the method comprises: determining the load threshold as a load level associated with a point of the fit curve that satisfies at least one condition for the quality of service of the first cell.

According to an example embodiment of the first aspect, the at least one condition comprises at least one of the following: an absolute lower limit for the quality of service of the first cell, or a relative lower limit for the quality of service of the first cell relative to quality of service of the first cell at a reference load level.

According to an example embodiment of the first aspect, reference load level is within a range of 5 to 20 % of a maximum load level of the first cell.

According to an example embodiment of the first aspect, the relative lower limit for the quality of service of the first cell is within a range of 50 to 80 % of the quality of service of the first cell at the reference load level.

According to an example embodiment of the first aspect, the method comprises: determining a plurality of quantile values for the quality of service of the first cell, the plurality of quantile values corresponding to the plurality of load levels of the first cell; and determining the fit curve based on performing curve fitting on the plurality of quantile values.

According to an example embodiment of the first aspect, the curve fitting comprises fitting a parametric exponential model to the plurality of quantile values.

According to an example embodiment of the first aspect, the plurality of quantile values comprise *n*-th quantile values of quality of service values of corresponding load levels of the first cell.

According to an example embodiment of the first aspect, *n* is within a range of 0.10 to 0.25.

According to an example embodiment of the first aspect, the method comprises: filtering the performance data to remove performance data samples of at least one of the plurality of load levels, for which the number of performance data samples is below a threshold.

According to an example embodiment of the first aspect, the plurality of load levels of the first cell comprise a plurality of time-frequency transmission resource utilization values, or the plurality of load levels of the first cell comprise a plurality of physical resource block utilization values.

According to an example embodiment of the first aspect, the quality of service of the first cell comprises downlink quality of service of the first cell.

According to an example embodiment of the first aspect, the quality of service of the first cell comprise average quality of service of users of the first cell at a plurality of time intervals.

According to an example embodiment of the first aspect, the method comprises: repeating obtaining the performance data, determining the fit curve, and determining the load threshold parameter.

According to an example embodiment of the first aspect, the method comprises: obtaining the performance data for a plurality of the first cells; determining a plurality of the fit curves for quality of service of the plurality of first cells; determining, based on the plurality of fit curves, a plurality of the load thresholds; and determining, based on the plurality of the load threshold, the load threshold for triggering the power saving mode of the second cell, wherein the coverage area of the second cell overlaps with coverage areas of the plurality of the first cells.

According to an example embodiment of the first aspect, the method comprises: determining the load threshold based on averaging the plurality of load thresholds or based on selecting a lowest load threshold of the plurality of load thresholds.

According to an example embodiment of the first aspect, the quality of service of the first cell comprises one of the following: data throughputs of the first cell at the plurality of load levels of the first cell, data throughputs associated with a particular application at the plurality of load levels of the first cell, or latency of data traffic at the plurality of load levels of the first cell.

According to an example embodiment of the first aspect, the performance data is received from at least one access node of a radio access network.

According to a second aspect, an apparatus may comprise means for performing the method of the first aspect, or any example embodiment thereof.

According to a third aspect, computer program, a computer program product, or one or more (non-transitory) computer-readable media may comprise program code configured to, when executed by a processor, cause an apparatus at least to perform the method of the first aspect, or any example embodiment thereof.

According to a fourth aspect, an apparatus may comprise at least one processor; and at least one memory including computer program code; the at least one memory and the computer code configured to, with the at least one processor, cause the apparatus at least to perform the method of the first aspect, or any example embodiment thereof.

Any example embodiment may be combined with one or more other example embodiments. Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
FIG. 1 illustrates an example of a communication network;
FIG. 2 illustrates an example of an apparatus configured to practise one or more example embodiments;
FIG. 3 illustrates an example of cells of a sector of an access node;
FIG. 4 illustrates an example of quality of service measurements at different load levels of a coverage cell;
FIG. 5 illustrates an example of a flow chart for determining a load threshold for triggering power saving mode of a capacity cell; and
FIG. 6 illustrates an example of a method for determining a load threshold for triggering power saving mode of a cell.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

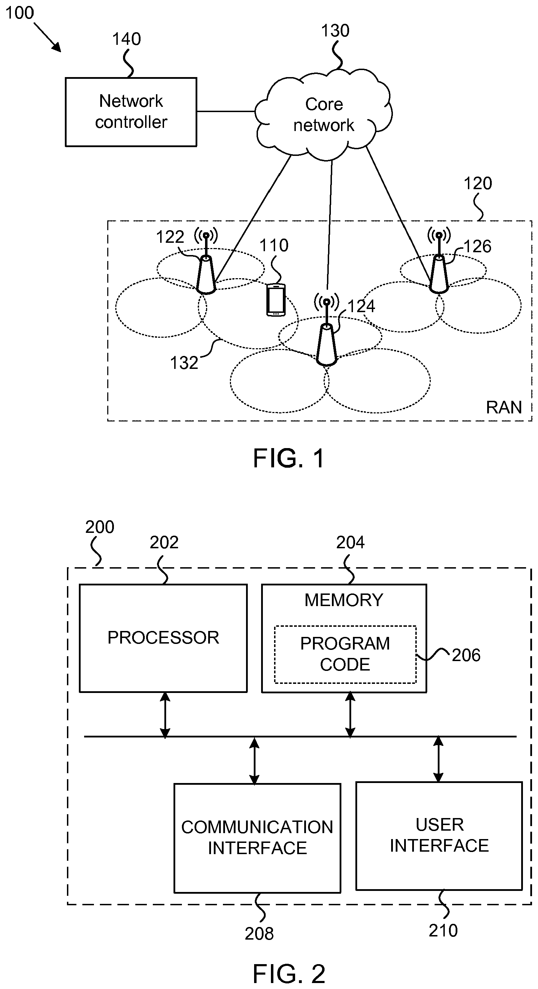

FIG. 1 illustrates an example of a communication network. Communication network 100 may comprise one or more devices, which may be also referred to as client nodes, user nodes, users, or user equipment (UE). An example of a device is UE 110, which may be configured to communicate with one or more access nodes 122, 124, 126 of a radio access network (RAN) 120. Signals transmitted by an access node to UE 110 may be referred to as downlink signals. Signals transmitted by UE 110 to an access node may be referred to as uplink signals. An access node may be also referred to as an access point or a base station.

Communication network 100 may be configured for example in accordance with the 4^{th} or 5^{th} generation (4G, 5G) digital cellular communication networks, as defined by the 3^{rd} Generation Partnership Project (3GPP). In one example, communication network 100 may operate according to 3GPP (4G) LTE (Long-Term Evolution) or 3GPP 5G NR (New Radio). Communication network 100 may hence comprise a cellular communication network, e.g., a cellular radio network. It is however appreciated that example embodiments presented herein are not limited to these example networks and may be applied in any present or future wireless communication networks, or combinations thereof, for example other type of cellular networks, short-range wireless networks, multicast networks, broadcast networks, or the like. Access nodes 122, 124, 126 of RAN 120 may for example comprise 5^{th} generation access nodes (gNB) or 4^{th} generation access nodes (eNodeB).

An access node may be configured to provide communication services within one or more cells, illustrated with dotted circles. A cell may correspond to geographical area(s) covered by signals transmitted by the access node. A cell may be configured to serve multiple users such as UE 110. For example, access node 122 may be configured to provide communication services within cell 132 and optionally within one or more other cells. Access nodes 124, 126 may be configured to provide communication services within respective cells.

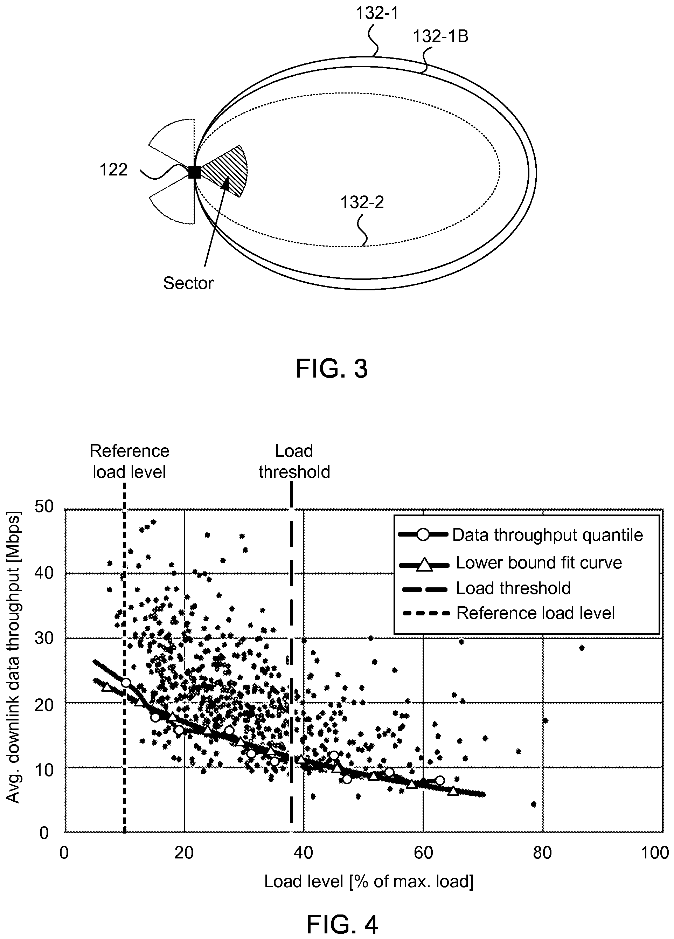

One or more access nodes may be configured to serve overlapping coverage areas, as will be further described with reference to FIG. 3. For example, communication network 100 may be configured with a coverage layer comprising one or more cells intended for providing basic coverage for services within communication network 100. Communication network 100 may be further configured with a capacity layer comprising one or more capacity layer cells having overlapping coverage area(s) with respective coverage layer cell(s). The capacity layer may be configured to serve users for example whenever the capacity of the coverage layer is not sufficient for serving all users within some geographical area.

Communication network 100 may further comprise a core network 130, which may comprise various network functions (NF) for establishing, configuring, and controlling data communication sessions of users, for example UE 110. The data communication sessions may carry data traffic, for example application data associated with one or more applications running on UE 110. Communication network 100 may further comprise a network controller 140, which may be responsible of monitoring and/or configuring various operations of RAN 120 and/or core network 130.

Network controller 140 may be external to core network 130. Even though some operations have been described as being performed by network controller 140, it is understood that similar functions may be alternatively performed by other network device(s) or network function(s) of communication network 100.

One task of network controller 140 may be to determine a load threshold for triggering power saving mode of capacity cell(s) of RAN 120. A load threshold may be also called a load level threshold. Network controller 140 may be configured to control cells of RAN 120 to reduce power consumption of RAN 120, for example by powering down or shutting off of cell(s) of RAN 120, or equipment associated therewith (e.g., transmission/reception circuitry, transmission/reception control circuitry, or power supply). Network controller 140 may be for example configured to select cell(s) of RAN 120, which are subsequently commanded to enter a power saving mode. A power saving mode may comprise a state, in which power consumption associated with a cell (e.g., equipment of the cell) is terminated or reduced, for example reduced with respect to an operational state of the cell. In the power saving mode, the capability of the cell to communicate with UEs may be restricted or disabled.

Even though illustrated as being connected to core network 130, network controller 140 may be, alternatively or additionally, configured to directly communicate with access node(s) 122, 124, 126 of RAN 120. Direct transmission or reception of data may comprise transmitting data to the access node(s) without routing the transmitted data via core network 130 (e.g., via network functions of core network 130), or receiving the data from access node(s) 122, 124, 126 without the data being routed via core network 130. Network controller 140 may be for example configured to directly receive performance data, e.g., performance management (PM) data, from access node(s) 122, 124, 126 or directly transmit to an access node a request for power saving mode for cell(s) of the access node.

Energy saving in mobile communication networks, such as communication network 100, may be achieved for example by enabling and configuring energy saving features offered by different network equipment vendors. Such energy saving features may for example comprise controlling shut down of excess capacity based on load thresholds. Energy saving may be for example achieved by shutting down the capacity layer(s), provided that the data traffic of the capacity layer cell(s) can be taken over by the coverage layer cell(s). Trial-and-error type of solutions for determining appropriate load threshold may take a long time to converge, and therefore example embodiments of the present disclosure enable automatically optimizing cell and sector specific configurations on a network scale. For example, methods are provided for configuring the energy saving features in a dynamic way taking into account the amount of local data traffic. The methods not only enable to save energy, but they also enable to avoid major impact on the quality of service (QoS) provided to users.

As noted above, one energy saving configuration parameter is the load threshold parameter. The load threshold may be set to control the maximum amount of data traffic to be taken over by coverage layer(s) from the capacity layer(s). The load threshold parameter may be used for determining when capacity layers can enter the power saving mode. It may be desired to configure the load threshold such that the power saving time (e.g., shut down time) of the capacity layer(s) is maximised, while avoiding overloading of the coverage layer(s), which may result in degraded QoS of the coverage layer(s). A challenge in determining the load threshold for different cells of communication network 100 is that the cells may behave differently, for example based on their location (e.g., rural/urban), local network topology, the number of users served by the cell, and mobility of the users. Changes in the behaviour of the cells may occur also due to seasonal changes. Hence, the desired trade-off point between energy saving and QoS may be different from one cell to another and also from one time period to another. Example embodiments of the present disclosure improve determination of the load threshold by enabling one-shot selection of the load threshold without a time-consuming trial-and-error process.

FIG. 2 illustrates an example embodiment of an apparatus 200 configured to perform one or more example embodiments. Apparatus 200 may be for example used to implement network controller 140. Apparatus 200 may comprise at least one processor 202. The at least one processor 202 may comprise, for example, one or more of various processing devices or processor circuitry, such as for example co-processor(s), microprocessor(s), controller(s), digital signal processor(s) (DSP), processing circuitry with or without an accompanying DSP, or various other processing device(s) including integrated circuit(s) such as, for example, application specific integrated circuit(s) (ASIC), field programmable gate array(s) (FPGA), microcontroller unit(s) (MCU), hardware accelerator(s), special-purpose computer chip(s), or the like.

Apparatus 200 may further comprise at least one memory 204. The at least one memory 204 may be configured to store, for example, computer program code 206 or the like, for example operating system software and application software. The at least one memory 204 may comprise one or more volatile memory devices, one or more non-volatile memory devices, and/or a combination thereof. For example, the at least one memory 204 may be embodied as magnetic storage device(s) (such as hard disk drive, floppy disk, magnetic tape, etc.), optical magnetic storage device(s), or semiconductor memory(ies) (such as mask ROM, PROM (programmable ROM), EPROM (erasable PROM), flash ROM, RAM (random access memory), etc.).

Apparatus 200 may further comprise communication interface 208 configured to enable apparatus 200 to transmit and/or receive information to/from other devices, functions, or entities, for example to/from access nodes of RAN 120 or network functions of core network 130. In one example, apparatus 200 may use communication interface 208 to receive performance data of cell(s) of RAN 120, for example from access node(s) 122, 124, 126 directly, or via core network 130. Network controller 140 may use communication interface 208 to transmit indication(s) of load threshold(s) determined for cell(s) of communication network 100, or request(s) for cell(s) of communication network 100 to enter power saving mode, either to access node(s) 122, 124, 126 directly, or via core network 130. Apparatus 200 may further comprise a user interface 210, for example for configuring apparatus 200 or for providing user output by apparatus 200, such as for example visual and/or audible signal(s), for example by speaker(s), display(s), light(s), or the like. Network controller 140 may be configured to output indication(s) of the load threshold(s) via user interface 210 or communication interface 208.

When apparatus 200 is configured to implement some functionality, some component and/or components of apparatus 200, such as for example the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as for example software components. According to an embodiment, the apparatus comprises a processor or processor circuitry, such as for example microcontroller(s), configured by the program code when executed to execute the embodiments of the operations and functionality described. A computer program, a computer program product, or at least one non-transitory computer-readable medium may therefore comprise instructions for causing, when executed, apparatus 200 to perform the method(s) described herein. Alternatively, or in addition, the functionality described herein can be performed, at least in part, by one or more hardware logic components. For example, and without limitation, illustrative types of hardware logic components that can be used include Field-programmable Gate Array(s) (FPGA), application-specific Integrated Circuit(s) (ASIC), application-specific Standard Product(s) (ASSP), System-on-a-chip system(s) (SOC), Complex Programmable Logic Device(s) (CPLD), Graphics Processing Unit(s) (GPU).

Apparatus 200 comprises means for performing at least one method described herein. In one example, the means comprises the at least one processor 202, the at least one memory 204 including program code 206 configured to, when executed by the at least one processor 202, cause apparatus 200 to perform the method. Apparatus 200 may comprise a computing device such as for example an access point, an access node, a base station, a server, a network device, a network function device, or the like. Although apparatus 200 is illustrated as a single device it is appreciated that, wherever applicable, functions of apparatus 200 may be distributed to a plurality of devices, for example to implement example embodiments as a cloud computing service.

FIG. 3 illustrates an example of cells of an access node. A transmission site may be configured to serve omnidirectional cells or be divided into multiple sectors. In the example of FIG. 3, access node 122 is configured to serve cells of one sector of the transmission site. Access node 122 may be configured to serve one or more coverage layer cells 132, ("coverage cells") in this example coverage cell 132-1 and/or coverage cell 132-1B. Access node 122 may be further configured to serve one or more capacity layer cells ("capacity cells"), in this example capacity cell 132-2. It is however noted that access node 122 may be configured to serve an any number of sectors, coverage cells, and/or capacity cells. Access node 112 may be also configured to serve omnidirectional capacity and coverage layer cells. It is further noted that in alternative example embodiments, the overlapping coverage cell(s) and capacity cell(s) may be served by different access nodes.

Coverage areas of the coverage cell(s) and respective capacity cell(s) may be overlapping, for example by more than 50 % of the coverage areas. Hence, overlapping may comprise substantial overlapping, rather than minor overlapping at edges of the cells. For example, central regions of the coverage areas of the coverage cell(s) and capacity cell(s) may be configured to overlap. In one example, the coverage areas of the coverage cell(s) and respective capacity cell(s) may be substantially identical. Coverage cell 132-1 may be referred to as a first cell. Coverage cells 132-1, 132-1B, and optionally any further coverage cells with an overlapping coverage area, may be together referred to as first cells. Capacity cell 132-2 may be referred to as a second cell. A coverage cell may be also referred to as basic cell.

FIG. 4 illustrates an example of quality of service (QoS) measurements at different load levels of a coverage cell. QoS may be measured by different metrics, such as for example key performance indicators (KPI), which may reflect the user experience in a particular cell. One generic metric for measuring the user experience is the user data throughput, which may be measured in downlink and/or uplink. Downlink direction may be however more restrictive in terms of user experience. The QoS values may therefore comprise downlink QoS values of coverage cell 132-1, for example average downlink QoS values (e.g., averaged over different users) at different time intervals. Network controller 140 may be configured to monitor the QoS by observing changes in the downlink user throughput KPI. Other applicable QoS metrics include data throughputs associated with particular application(s) (e.g., video streaming, gaming, web browsing, or the like) and the latency of data traffic (e.g., lower latency meaning better QoS). The QoS metrics may be configured to be measured at different load levels of coverage cell 132-1.

Other KPI(s) may be used for measuring the load level(s) of cell(s). One example of such KPI is the utilization of time-frequency transmission resources, such as for example physical resource blocks (PRB). A cell may be configured with a particular amount of time-frequency transmission resources, e.g., PRBs. The amount of time-frequency transmission resources may be dependent on the bandwidth allocated for the cell, as well as other transmission parameters.

A PRB may comprise time-frequency resource elements (RE). For example, in case of an orthogonal frequency division multiplexing (OFDM) system, one OFDM symbol may comprise a plurality of subcarriers. Each subcarrier may be modulated by a modulation scheme, such as for example quadrature amplitude modulation (QAM) or phase shift keying (PSK). A resource element may comprise one subcarrier at one OFDM symbol. A resource element may be therefore configured to carry one modulated symbol. A PRB may comprise a set of resource elements, which may be carried by one or more OFDM symbols. A PRB may therefore comprise a set of time-frequency transmission resources. In general, the load levels of a cell may correspond to different time-frequency transmission resource utilization values, an example of which is the PRB utilization. Other types of load level measurement, such as for example the load of non-guaranteed bit rate (non-GBR) data traffic, may be alternatively used.

In the example of FIG. 4, the QoS has been measured by the average downlink data throughput of users of coverage cell 132-1. Each black dot represents an average of measurement samples of multiple users during certain time interval. The average downlink data throughput of users of the cell has been plotted with respect to the load level of the cell during the time interval of the respective measurement samples.

Example embodiments of the present disclosure enable to mitigate the problem of coverage layer overload when capacity cell(s) enter a power saving mode. For example, a load threshold for entering the power saving mode may be determined based on the shape of the distribution between the QoS (e.g., downlink user throughput) and the load level(s) (e.g., PRB usage) of the coverage cell(s).

Based on the shape of the distribution it is observed that the data throughput tends to be monotonically decreasing when the load level increases, meaning that the QoS decreases as the load of the cell increases. There is however some variation in the data throughput at a given load level, for example at low load levels. Historical performance data may be therefore used to effectively manage this uncertainty.

The shape of the distribution may however change slightly from one cell to another. The shape of the distribution may also change with respect to time, for example from one season to another. Example embodiments of the present disclosure enable to choose the load threshold parameter such that the data throughput, or in general QoS, of the coverage cell is above a desired value that may be achieved with a controlled risk level.

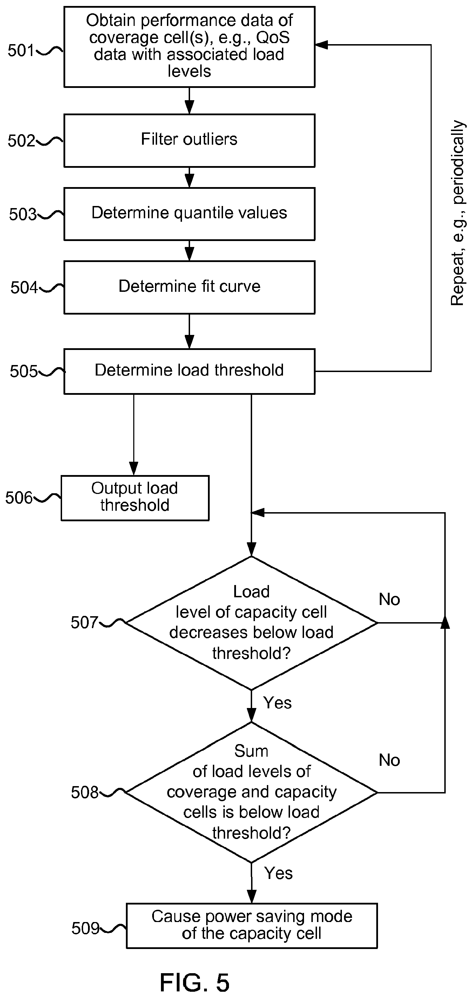

FIG. 5 illustrates an example of a flow chart for determining a load threshold for triggering power saving mode of a capacity cell. Even though operations of FIG. 5 have been described as being configured to be performed by network controller 140, similar operations, or a subset of them, may be configured to be performed by another device, for example a network device of core network 130. Even though some operations have been described with reference to a single coverage cell 132-1, it is understood that similar operations may be performed for other coverage cell(s) of RAN 120, for example coverage cell 132-1B.

At operation 501, network controller 140 may be configured to obtain performance data of coverage cell(s) of communication network 100, for example coverage cell 132-1 (cf. "first cell"). The performance data may comprise performance management (PM) data. The performance data may comprise values of a QoS metric, e.g., data throughput values, of coverage cell 132-1. In general, the performance data may be indicative of the QoS of coverage cell 132-1. The performance data may comprise historical performance data, for example hourly or ½-hour aggregation of QoS data during a one-month period, for example using the downlink PRB utilization as the QoS metric and the downlink user data throughput as the load level metric. The performance data may be therefore indicative of the QoS of coverage cell 132-1 at different load levels of coverage cell 132-1. Samples of the performance data, e.g., samples of QoS data, may be associated with respective load levels.

As illustrated in FIG. 4, the load level may be expressed for example as a share (e.g., percentage) of a maximum load level of coverage cell 132-1. The maximum load level of the cell may be for example the amount of time-frequency resources available for coverage cell 132-1, for example at a given time interval. Note that the maximum load level of coverage cell 132-1 may change, for example depending on transmission parameters, e.g., number of subcarriers, allocated for coverage cell 132-1 at different time intervals. The maximum load level may therefore comprise a current maximum load level at the time interval of each sample of the QoS measurements. Measuring the load level relative to the current maximum load level of coverage cell 132-1 enables to use QoS data obtained with different transmission parameters of coverage cell 132-1. Alternatively, absolute metrics, e.g., number of PRBs, may be used for measuring the load level.

At operation 502, network controller 140 may be configured to filter outliers. For example, network controller 140 may be configured to filter the performance data such that performance data samples of load level(s), for which the number of performance data samples is below a threshold, are removed from the performance data, for example not considered when determining the load threshold. The load level(s) may comprise range(s) of load level. For example, if the number of data throughput samples at load level 75 - 85 % is below a threshold, e.g., ten samples, the corresponding samples may be removed. This provides the benefit of improving reliability of determining the load threshold. In one example, network controller 140 may be configured to filter out samples associated with very low and/or high load level, for example samples associated with load level(s) below a low load threshold (e.g., 5 %) and/or samples associated with load level(s) above a high load (e.g., 80 %). This improves reliability of determining the load threshold, because load levels that may be associated with very sparse data are removed from consideration.

At operation 503, network controller 140 may be configured to determine quantile values for the QoS of coverage cell 132-1. The quantile values may correspond to respective load levels of coverage cell 132-1. For example, a quantile value or each quantile may be associated with a particular load level (e.g., a range of load levels). A quantile value may comprise a quantile value of the distribution of QoS on that load level. For example, a quantile value of approximately 16 Mbps may be determined for load level 20 %. Quantile values of the QoS may be therefore defined as a function of the load level. A curve corresponding to the data throughput quantiles is marked with circles in FIG. 4.

The quantile values may comprise n-th quantile values of the QoS values of corresponding load levels of coverage cell 132-1. An n-th quantile value may comprise a QoS value for which the ratio of QoS values below the QoS value and the total number of QoS values on that load level is equal to *n.* For example, for 0.25-quantile, 25 % of the QoS samples of that load level are below the quantile value (QoS). The value of *n* may be for example within a range of 0.1 to 0.25, for example 0.10 or 0.25. This has been observed to provide a good basis for determining the fit curve for determination of the load threshold.

At operation 504, network controller 140 may be configured to determine a fit curve for the QoS of coverage cell 132-1. The fit curve may be determined as a function of the load level of coverage cell 132-1. Note that any suitable type of fit curve, e.g., a continuous curve or a curve evaluated at discrete point of the load level, may be used. A lower bound fit curve may comprise a curve fitted to the lower side of the distribution of QoS values for different load levels. For example, a lower bound fit curve may comprise a fit curve for which *n* ≤ 0.5. The fit curve may therefore comprise a lower bound fit curve. In the example of FIG. 4, a lower bound fit curve is marked with triangles and it approximates the lower edge of the distribution of the QoS samples as function of the load level. The lower bound fit curve may be configured to neglect a certain (e.g., small) percentile of datapoints, e.g., outliers, for example by fitting a parametric exponential model to a quantile of the throughput data, as will be further described below.

As one example, network controller 140 may be configured to determine the fit curve based on the quantile values determined at operation 503. For example, network controller 140 may be configured to perform curve fitting on the quantile values to determine the fit curve. The curve fitting may comprise any suitable type of curve fitting, for example fitting a parametric exponential model to quantile values.

A k-th order parametric exponential model may comprise a parametrized exponential function such as for example *aₖ*x*^{k}* + *a*_{*k-*1}x^{*k*-1} ... *a*₁x^{l} + *a*₀. Curve fitting may comprise the process of determining parameters *aₖ* (e.g., weights) of this function such that the curve fits the set of QoS values, e.g., the quantile values.

A parametric exponential model has been observed to provide good basis for capturing the nature of the monotonically decreasing QoS values with increasing load level. The use of parametric exponential model therefore improves the determination of the load threshold. For example, a second order parametric exponential model has been found to be suitable for this purpose, as can be observed from FIG. 4.

It is however also possible to use other type of curve fitting methods such as for example line fitting (e.g.., 1^{st} order curve fitting, *a*₁x¹ + *a*₀), for example to determine the load threshold with lower computational complexity. Example embodiments of the present disclosure enable to exploit the observed relationship between the QoS and load level of the coverage cell(s) to algorithmically optimize the load threshold. In general, network controller 140 may be configured to determine a fit curve for the QoS of the first cell. For example, any fit curve reflecting the monotonically decreasing relationship between the QoS and load level may be used as basis for determining the load level. Using a lower bound fit curve, for example as determined based on the n-quantile values (*n* ≤ 0.5), provides the benefit of enabling determination of the load threshold based on a worst-case performance limit for the QoS. For example, by determining a lower bound curve fitted to 0.1-quantile values of the data throughput, network controller 140 may ensure that the QoS in terms of data throughput will not be worse than that.

At operation 505, network controller 140 may be configured to determine the load threshold. The load threshold may be determined for triggering a power saving mode of capacity cell 132-2 (cf. "second cell"), as will be further described with reference to operation 509. Network controller 140 may be configured to determine the load threshold based on the fit curve determined at operation 504.

Network controller 140 may be configured to determine the load threshold as a load level, which is associated with a point of the fit curve that satisfies certain condition(s) for the QoS of cell 132-1. This provides the benefit of associating the load threshold for triggering the power saving mode of capacity cell 132-2 with the QoS level of coverage cell 132-1. This enables to control the maximum amount of load to be taken over by coverage cell 132-1 from capacity cell 132-2. The condition(s) may comprise minimum performance limit(s) for the QoS, e.g., absolute and/or relative QoS limits, for example as provided below.

The condition(s) may comprise an absolute lower limit for the QoS of coverage cell 132-1, for example an absolute data throughput limit, such as for example 8 Mbps. This enables network controller 140 to determine the load threshold such that the user data throughput remains above a desired absolute limit (e.g., at least 8 Mbps).

The condition(s) may comprise a relative lower limit for the QoS, e.g., a relative data throughput limit, of coverage cell 132-1 relative to QoS of coverage cell 132-1 at a reference load level. This enables network controller 140 to determine the load threshold such that the user data throughput remains above a desired relative limit of the data throughput achieved at the reference load level.

The reference load level may be for example within a range of 5 - 20 % of the maximum load of coverage cell 132-1. This provides the benefit of increasing the probability that the load (e.g., data traffic) of capacity cell 132-2 can be taken over by coverage cell 132-1. In the example of FIG. 4, the reference load level is 10 % of the maximum load of coverage cell 132-1.

The relative lower limit may be within a range of 50 - 80 %, e.g., at least 70 %, of the maximum load of coverage cell 132-1. This provides the benefit of increasing the probability that the load of capacity cell 132-2 can be taken over by coverage cell 132-1. In the example of FIG. 4, the load threshold has been determined to be approximately 38 % of the maximum load level of coverage cell 132-1.

The load threshold parameter may be configured for capacity cells. However, the logic of energy saving features may evaluate the possibility of the capacity cell offload to designated coverage cell(s). The evaluation of the capacity cell(s) offload to coverage cell(s) may be done at sector level. Cells may be considered to belong to the same sector if their coverage areas overlap, e.g., to certain extent such as 50 %. Energy saving features may be configured such that there are multiple coverage cells for one capacity cell, e.g., within a single sector. The disclosed methods may be therefore applied for coverage cells individually and network controller 140 may be configured to evaluate which of the resulted thresholds will be applied. For example, network controller might be configured to select the most restrictive load threshold or an average of the load thresholds.

In case of multiple coverage cells overlapping, in terms of coverage area, with capacity cell 132-2, e.g., coverage cells 132-1, 132-1B (cf., "first cells"), network controller 140 may be configured to obtain the performance data for coverage cells 132-1, 132-1B (cf., operation 501). Network controller 140 may be configured to determine fit curves for coverage cells 132-1, 132-1B, e.g., a separate fit curve for each of the coverage cells 132-1, 132-1B, for example as described with reference to operations 502 to 504.

Network controller 140 may be configured to determine load thresholds, which may be referred to as auxiliary load thresholds, corresponding to the fit curves of the coverage cells 132-1, 132-1B, for example as described above. Network controller 140 may be configured to determine the load threshold for triggering the power saving mode of capacity cell 132-2 based on the auxiliary load thresholds. For example, network controller 140 may be configured to average the auxiliary load thresholds to determine the load threshold or to select the lowest load threshold among the auxiliary load thresholds. This provides the benefit of determining the load threshold such that QoS at different coverage cells within the same coverage are taken into account. This provides the benefit of increasing the probability that the load of capacity cell 132-2 can be taken over by coverage cells 132-1, 132-1B. Note that instead of two coverage cells 132-1, 132-1B, network controller 140 may be configured to determine the load threshold based on performance data of any number of overlapping coverage cells and respective auxiliary load thresholds.

Network controller 140 may be configured to repeat, for example periodically or according to a predetermined schedule (e.g., with irregular intervals), the determination of the load threshold (e.g., one or more of operations 501 to 505). Alternatively, network controller 140 may be configured to repeat determining the load threshold, in response to detecting an event configured to trigger updating of the load threshold. The event may for example comprise detecting QoS of the coverage cells to decrease below a threshold. This provides the benefit of enabling updating of the load threshold, for example daily, weekly, or when needed. As new performance data becomes available, network controller 140 may be configured to adapt the load threshold based on changes in the distribution of the performance data, thereby continuously optimising the load threshold and power saving configuration in communication network 100.

At operation 506, network controller 140 may be configured to output an indication of the load threshold. Network controller 140 may be for example configured to transmit an indication of the load threshold to another device or software component, for example for execution of operations 507, 508, and/or 509 by the other device or the other software component. Alternatively, network controller 140 may be configured to output an indication of the load threshold via a user interface, for example to enable a human operator to control power saving mode of capacity cell(s) within communication network 100. Network controller 140 may not be configured to perform operation 506, if network controller itself is configured to perform operations 507, 508, and/or 509.

At operation 507, network controller 140 may be configured to determine whether the load level of capacity cell 132-2 decreases below the load threshold. If not, network controller 140 may be configured to continue monitoring the load level of capacity cell 132-2, optionally considering updates of the load threshold as determined by repeating one or more of operations 501 to 505 in parallel with monitoring the load level of capacity cell 132-2.

Network controller 140 may be configured to move to execution of operation 508, or directly to execution of operation 509, in response to determining that the load level of capacity cell 132-2 decreases below the load threshold.

At operation 508, network controller 140 may be configured to determine whether the sum of the load level of capacity cell 132-2 and the load level of coverage cell 132-1 ( or coverage cell 132-1B) is below the load threshold. If not, network controller 140 may be configured to continue monitoring the load level of capacity cell 132-2 (cf. operation 507) and at least one of coverage cells 132-1, 132-1B, optionally with respect to the updated load threshold. Comparing the sum of load levels of the coverage cell 132-1 and capacity cell 132-2 to the load threshold enables network controller 140 to ensure that the current load of capacity cell 132-2 can be taken over by coverage cell 132-1 (or 132-1B) such that coverage cell 132-1 (or 132-1B) is not overloaded. Note that network controller 140 may be configured to perform one or both of operations 507 and 508.

Network controller 140 may be configured to move to execution of operation 509, in response to determining that the sum of load levels of coverage cell 132-1 (or coverage cell 132-1B) and capacity cell 132-2 is below the load threshold. Note that at this point network controller 140 may have already determined that the load level of capacity cell 132-2 has decreased below the load threshold. Network controller 140 may be therefore configured to move to execution of operation 509, in response to determining that the load level of capacity cell 132-1 decreases below the load threshold. This provides the benefit of increasing the probability that the load of capacity cell 132-2 can be taken over by coverage cell(s) 132-1, 132-1B. Alternatively, or additionally, network controller 140 may be configured to move to execution of operation 509, in response to determining that the sum of the load level of coverage cell 132-1 (or 132-1B) and the load level of capacity cell 132-2 is below the load threshold. This provides the benefit of further increasing the probability that the load of capacity cell 132-2 can be taken over by coverage cell 132-1 or 132-1B.

At operation 509, network controller 140 may be configured to cause capacity cell 132-2 to enter the power saving mode. For example, network controller 140 may be configured to transmit, for example to access node 122, a command or a request for capacity cell 132-2 to enter the power saving mode. In response to receiving such a command or request, access node 122 may be configured to reduce power consumption associated with serving capacity cell 132-2, for example by switching off or partially powering down equipment (e.g., transceiver(s)) configured to serve capacity cell 132-2.

Example embodiments of the present disclosure therefore improve power saving in a cellular communication network. The example embodiments enable automatic selection of an optimized load threshold parameter for energy saving features. The disclosed methods enable fast one-shot selection of the load threshold. Time-consuming trial-and-error based determination of the load threshold may be therefore avoided. The disclosed methods are scalable at network level and they enable adaptation to changes both in the environment and the network.

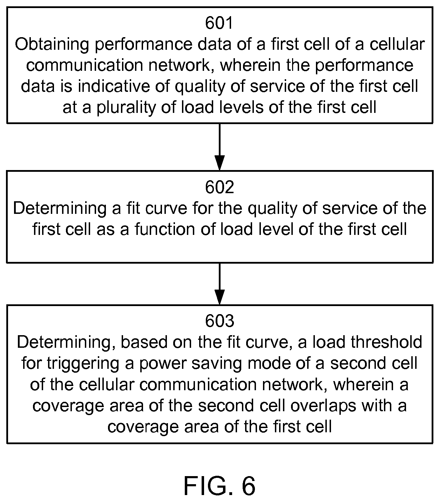

FIG. 6 illustrates an example of a method for determining a load threshold for triggering power saving mode of a cell. The method may be at least partially computer implemented.

At 601, the method may comprise obtaining performance data of a first cell of a cellular communication network, wherein the performance data is indicative of quality of service of the first cell at a plurality of load levels of the first cell.

At 602, the method may comprise determining a fit curve for the quality of service of the first cell as a function of load level of the first cell.

At 603, the method may comprise determining, based on the fit curve, a load threshold for triggering a power saving mode of a second cell of the cellular communication network, wherein a coverage area of the second cell overlaps with a coverage area of the first cell.

Further features of the method directly result for example from the functionalities of network controller 140 or in general apparatus 200, as described throughout the specification and in the appended claims, and are therefore not repeated here. Different variations of the method may be also applied, as described in connection with the various example embodiments.

An apparatus, such as for example a network device configured to implement one or more network functions or entities, may be configured to perform or cause performance of any aspect of the method(s) described herein. Further, a computer program or a computer program product may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at least one processor, and program code configured to, when executed by the at least one processor, cause performance of any aspect of the method(s). In general, computer program instructions may be executed on means providing generic processing functions. Such means may be embedded for example in computer(s), server(s), or the like. The method(s) may be thus computer-implemented, for example based algorithm(s) executable by the generic processing functions, an example of which is the at least one processor 202.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification which is defined by the appended claims.

## Claims

1. A computer-implemented method, comprising:
obtaining performance data (501) of a first cell of a cellular communication network, wherein the performance data is indicative of quality of service of the first cell at a plurality of load levels of the first cell;
determining a fit curve (504) for the quality of service of the first cell as a function of load level of the first cell; and
determining, based on the fit curve, a load threshold (505) for triggering a power saving mode of a second cell of the cellular communication network, wherein a coverage area of the second cell overlaps with a coverage area of the first cell.

2. The method according to claim 1, further comprising:
outputting an indication of the load threshold,
causing the second cell to enter the power saving mode, in response to determining that a load level of the second cell decreases below the load threshold, and/or
causing the second cell to enter the power saving mode, in response to determining that a sum of a load level of the first cell and the load level of the second cell is below the load threshold.

3. The method according to claim 1 or 2, further comprising:
determining the load threshold as a load level associated with a point of the fit curve that satisfies at least one condition for the quality of service of the first cell.

4. The method according to claim 3, wherein the at least one condition comprises at least one of the following:
an absolute lower limit for the quality of service of the first cell, or
a relative lower limit for the quality of service of the first cell relative to quality of service of the first cell at a reference load level.

5. The method according to any of claims 1 to 4, further comprising:
determining a plurality of quantile values for the quality of service of the first cell, the plurality of quantile values corresponding to the plurality of load levels of the first cell; and
determining the fit curve based on performing curve fitting on the plurality of quantile values.

6. The method according to claim 5, wherein the curve fitting comprises fitting a parametric exponential model to the plurality of quantile values.

7. The method according to claim 5 or 6, wherein the plurality of quantile values comprise n-th quantile values of quality of service values of corresponding load levels of the first cell.

8. The method according to any of claims 1 to 7, further comprising:
filtering the performance data to remove performance data samples of at least one of the plurality of load levels, for which the number of performance data samples is below a threshold.

9. The method according to any of claims 1 to 8, wherein the plurality of load levels of the first cell comprise a plurality of time-frequency transmission resource utilization values, or wherein the plurality of load levels of the first cell comprise a plurality of physical resource block utilization values.

10. The method according to any of claims 1 to 9, wherein the quality of service of the first cell comprises downlink quality of service of the first cell.

11. The method according to any of claims 1 to 10, wherein the quality of service of the first cell comprise average quality of service of users of the first cell at a plurality of time intervals.

12. The method according to any of claims 1 to 11, further comprising:
repeating obtaining the performance data, determining the fit curve, and determining the load threshold parameter.

13. The method according to any of claims 1 to 12, wherein the quality of service of the first cell comprises one of the following:
data throughputs of the first cell at the plurality of load levels of the first cell,
data throughputs associated with a particular application at the plurality of load levels of the first cell,
or latency of data traffic at the plurality of load levels of the first cell.

14. An apparatus comprising means for performing the method according to any of claims 1 to 13.

15. A computer program comprising program code configured to, when executed by a processor, cause an apparatus at least to perform the method according to any of claims 1 to 13.

## Patentansprüche

1. Computerimplementiertes Verfahren, umfassend:
Erhalten von Leistungsdaten (501) einer ersten Zelle eines zellularen Kommunikationsnetzwerks, wobei die Leistungsdaten die Dienstqualität der ersten Zelle bei einer Vielzahl von Lastniveaus der ersten Zelle angeben;
Bestimmen einer Anpassungskurve (504) für die Dienstqualität der ersten Zelle in Abhängigkeit vom Lastniveau der ersten Zelle; und
Bestimmen, basierend auf der Anpassungskurve, eines Lastschwellenwerts (505) zum Auslösen eines Energiesparmodus einer zweiten Zelle des zellularen Kommunikationsnetzwerks, wobei sich ein Abdeckungsbereich der zweiten Zelle mit einem Abdeckungsbereich der ersten Zelle überschneidet.

2. Verfahren nach Anspruch 1, weiter umfassend:
Ausgeben einer Angabe des Lastschwellenwerts,
Veranlassen, dass die zweite Zelle in den Energiesparmodus eintritt, als Reaktion auf ein Bestimmen, dass ein Lastniveau der zweiten Zelle unter den Lastschwellenwert sinkt, und/oder
Veranlassen, dass die zweite Zelle in den Energiesparmodus eintritt, als Reaktion auf ein Bestimmen, dass eine Summe aus einem Lastniveau der ersten Zelle und dem Lastniveau der zweiten Zelle unter dem Lastschwellenwert liegt.

3. Verfahren nach Anspruch 1 oder 2, weiter umfassend:
Bestimmen des Lastschwellenwerts als ein Lastniveau, das mit einem Punkt der Anpassungskurve verbunden ist, der mindestens eine Bedingung für die Dienstqualität der ersten Zelle erfüllt.

4. Verfahren nach Anspruch 3, wobei die mindestens eine Bedingung mindestens eines der Folgenden umfasst:
einen absoluten unteren Grenzwert für die Dienstqualität der ersten Zelle, oder
einen relativen unteren Grenzwert für die Dienstqualität der ersten Zelle bezüglich der Dienstqualität der ersten Zelle bei einem Referenzlastniveau.

5. Verfahren nach einem der Ansprüche 1 bis 4, weiter umfassend:
Bestimmen einer Vielzahl von Quantilwerten für die Dienstqualität der ersten Zelle, wobei die Vielzahl von Quantilwerten der Vielzahl von Lastniveaus der ersten Zelle entspricht; und
Bestimmen der Anpassungskurve basierend auf der Durchführung einer Kurvenanpassung an die Vielzahl von Quantilwerten.

6. Verfahren nach Anspruch 5, wobei die Kurvenanpassung ein Anpassen eines parametrischen Exponentialmodells an die Vielzahl von Quantilwerten umfasst.

7. Verfahren nach Anspruch 5 oder 6, wobei die Vielzahl von Quantilwerten n-te Quantilwerte von Dienstqualitätswerten entsprechender Lastniveaus der ersten Zelle umfasst.

8. Verfahren nach einem der Ansprüche 1 bis 7, weiter umfassend:
Filtern der Leistungsdaten, um Leistungsdaten-Abtastwerte für mindestens eines der Vielzahl von Lastniveaus, für das die Anzahl der Leistungsdaten-Abtastwerte unter einem Schwellenwert liegt, zu entfernen.

9. Verfahren nach einem der Ansprüche 1 bis 8, wobei die Vielzahl von Lastniveaus der ersten Zelle eine Vielzahl von Zeit-Frequenz-Übertragungsressourcen-Nutzungswerten umfasst, oder wobei die Vielzahl von Lastniveaus der ersten Zelle eine Vielzahl von physischen Ressourcenblock-Nutzungswerten umfasst.

10. Verfahren nach einem der Ansprüche 1 bis 9, wobei die Dienstqualität der ersten Zelle eine Downlink-Dienstqualität der ersten Zelle umfasst.

11. Verfahren nach einem der Ansprüche 1 bis 10, wobei die Dienstqualität der ersten Zelle eine durchschnittliche Dienstqualität von Benutzern der ersten Zelle bei einer Vielzahl von Zeitintervallen umfasst.

12. Verfahren nach einem der Ansprüche 1 bis 11, weiter umfassend:
Wiederholen des Erhaltens der Leistungsdaten, des Bestimmens der Anpassungskurve und des Bestimmens des Lastschwellenwert-Parameters.

13. Verfahren nach einem der Ansprüche 1 bis 12, wobei die Dienstqualität der ersten Zelle eines der Folgenden umfasst:
Datendurchsätze der ersten Zelle bei der Vielzahl von Lastniveaus der ersten Zelle,
Datendurchsätze in Verbindung mit einer bestimmten Anwendung bei der Vielzahl von Lastniveaus der ersten Zelle,
oder Latenz des Datenverkehrs bei der Vielzahl von Lastniveaus der ersten Zelle.

14. Einrichtung, umfassend Mittel zum Durchführen des Verfahrens nach einem der Ansprüche 1 bis 13.

15. Computerprogramm, umfassend Programmcode, der dazu ausgebildet ist, bei Ausführung durch einen Prozessor, eine Einrichtung dazu zu veranlassen, mindestens das Verfahren nach einem der Ansprüche 1 bis 13 durchzuführen.

## Revendications

1. Procédé mis en oeuvre par ordinateur, comprenant :
l'obtention de données de performance (501) d'une première cellule d'un réseau de communication cellulaire, dans lequel les données de performance indiquent une qualité de service de la première cellule à une pluralité de niveaux de charge de la première cellule ;
la détermination d'une courbe d'ajustement (504) pour la qualité de service de la première cellule en fonction du niveau de charge de la première cellule ; et
la détermination, sur la base de la courbe d'ajustement, d'un seuil de charge (505) pour déclencher un mode d'économie d'énergie d'une deuxième cellule du réseau de communication cellulaire, dans lequel une zone de couverture de la deuxième cellule chevauche une zone de couverture de la première cellule.

2. Procédé selon la revendication 1, comprenant en outre :
la fourniture d'une indication du seuil de charge,
le fait d'amener la deuxième cellule à passer en mode d'économie d'énergie, en réponse à la détermination du fait qu'un niveau de charge de la deuxième cellule diminue en dessous du seuil de charge, et/ou
le fait d'amener la deuxième cellule à passer en mode d'économie d'énergie, en réponse à la détermination du fait qu'une somme d'un niveau de charge de la première cellule et du niveau de charge de la deuxième cellule est inférieure au seuil de charge.

3. Procédé selon la revendication 1 ou la revendication 2, comprenant en outre :
la détermination du seuil de charge en tant que niveau de charge associé à un point de la courbe d'ajustement qui satisfait à au moins une condition de qualité de service de la première cellule.

4. Procédé selon la revendication 3, dans lequel l'au moins une condition comprend au moins l'un des éléments suivants :
une limite inférieure absolue pour la qualité de service de la première cellule, ou
une limite inférieure relative pour la qualité de service de la première cellule par rapport à la qualité de service de la première cellule à un niveau de charge de référence.

5. Procédé selon l'une quelconque des revendications 1 à 4, comprenant en outre :
la détermination d'une pluralité de valeurs de quantile pour la qualité de service de la première cellule, la pluralité de valeurs de quantile correspondant à la pluralité de niveaux de charge de la première cellule ; et
la détermination de la courbe d'ajustement sur la base de la réalisation d'un ajustement de courbe sur la pluralité de valeurs de quantile.

6. Procédé selon la revendication 5, dans lequel l'ajustement de courbe comprend l'ajustement d'un modèle exponentiel paramétrique à la pluralité de valeurs de quantile.

7. Procédé selon la revendication 5 ou la revendication 6, dans lequel la pluralité de valeurs de quantile comprend des *n-èmes* valeurs de quantile de valeurs de qualité de service de niveaux de charge correspondants de la première cellule.

8. Procédé selon l'une quelconque des revendications 1 à 7, comprenant en outre :
le filtrage des données de performance pour supprimer des échantillons de données de performance d'au moins l'un de la pluralité de niveaux de charge, pour lequel le nombre d'échantillons de données de performance est inférieur à un seuil.

9. Procédé selon l'une quelconque des revendications 1 à 8, dans lequel la pluralité de niveaux de charge de la première cellule comprend une pluralité de valeurs d'utilisation de ressources de transmission temps-fréquence, ou dans lequel la pluralité de niveaux de charge de la première cellule comprend une pluralité de valeurs d'utilisation de blocs de ressources physiques.

10. Procédé selon l'une quelconque des revendications 1 à 9, dans lequel la qualité de service de la première cellule comprend une qualité de service de liaison descendante de la première cellule.

11. Procédé selon l'une quelconque des revendications 1 à 10, dans lequel la qualité de service de la première cellule comprend une qualité de service moyenne d'utilisateurs de la première cellule à une pluralité d'intervalles de temps.

12. Procédé selon l'une quelconque des revendications 1 à 11, comprenant en outre :
la répétition de l'obtention des données de performance, de la détermination de la courbe d'ajustement et de la détermination du paramètre de seuil de charge.

13. Procédé selon l'une quelconque des revendications 1 à 12, dans lequel la qualité de service de la première cellule comprend l'un des éléments suivants :
des débits de données de la première cellule à la pluralité de niveaux de charge de la première cellule,
des débits de données associés à une application particulière à la pluralité de niveaux de charge de la première cellule,
ou la latence du trafic de données à la pluralité de niveaux de charge de la première cellule.

14. Appareil comprenant des moyens pour mettre en oeuvre le procédé selon l'une quelconque des revendications 1 à 13.

15. Programme informatique comprenant un code de programme configuré pour, lorsqu'il est exécuté par un processeur, amener un appareil au moins à mettre en oeuvre le procédé selon l'une quelconque des revendications 1 à 13.
